# EUROPÄISCHE PATENTSCHRIFT

(11) **EP 0 908 640 B1**
(45) Veröffentlichungstag und Bekanntmachung des Hinweises auf die Patenterteilung: **19.12.2001**
(21) Anmeldenummer: 98117624.1
(22) Anmeldetag: 17.09.1998
(51) Int. Cl.: F16D 23/14

(54) **Ausrückeinrichtung zur Kupplungsbetätigung bei Kraftfahrzeugen**
Release device for vehicle clutch actuator
Dispositif de débrayage pour actionneur d'embrayage de véhicule

(30) Priorität: 10.10.1997 DE 19744821
(43) Veröffentlichungstag der Anmeldung: 14.04.1999
(73) Patentinhaber: Mannesmann Sachs Aktiengesellschaft, 97424 Schweinfurt (DE)
(72) Erfinder: Grosspietsch, Wofgang, Dipl.-Ing.(FH), 97422 Schweinfurt (DE); Husse, Ulrich, Dipl.-Ing.(FH), 97422 Schweinfurt (DE); Stockmann, Bernd, Dipl.-Ing.(FH), 97520 Röthlein (DE)

(56) Entgegenhaltungen:
- DE-A- 3 810 369
- PATENT ABSTRACTS OF JAPAN vol. 097, no. 005, 30. Mai 1997 & JP 09 014291 A (NISSAN DIESEL MOTOR CO LTD), 14. Januar 1997

## Beschreibung

Die Erfindung betrifft eine Ausrückeinrichtung zur Kupplungsbetätigung bei Kraftfahrzeugen gemäß dem Oberbegriff des Anspruchs 1

Mit der DE 38 10 369 A1 ist ein Ausrücksystem bekannt geworden, welches aus einer Ausrückgabel besteht, welches an ihrem einen Ende schwenkbar an einem Gehäuseteil gelagert, an ihrem anderen Ende mit einer Betätigungseinrichtung verbunden und in einem dazwischen liegenden Bereich in einer Öffnung von der Getriebewelle und teilweise vom Ausrücklager durchdrungen ist, wobei im Gehäuse (Schiebehülse 8) des Ausrücklagers zwei einander gegenüberliegend angeordnete Haltenasen zur Befestigung des Ausrücklagers an der Gabel vorgesehen sind. Ein an der Schiebehülse angeordneter radialer Flansch weist zwei Wölbungen auf, deren Scheitellinie mit einer Fläche der Gabel zusammenwirkt. Die Wölbungen sind zur Mitte der Schiebehülse hin durch eine Begrenzungskante begrenzt, die mit einer Führungskante in der Gabel zusammenarbeitet, um eine gegen Verdrehung gesicherte Position einzunehmen.

Die mit der vorliegenden Erfindung vorgeschlagene Ausführung einer Schiebehülse weist im Gegensatz zum vorgenannten Stand der Technik Nocken auf, die den vorgenannten Wölbungen entsprechen, jedoch im Gegensatz zu diesen paarweise verschiedene Höhen aufweisen, wodurch zu einer Betätigungsebene verschiedene Einbauhöhen realisierbar sind. Es handelt sich um z. B. 90° zueinander verdreht angeordnete Nockenpaare, die in ein Fenster einer Schwinge einfügbar sind, wobei die Schiebehülse wie auch das Schwingenfenster Konturen aufweisen, die die Schiebehülse in entweder der einen oder der anderen Position fixieren. Der Zweck der Einrichtung liegt in einer Verwendung von ein und denselben Einbauteilen zur Erzielung von verschiedenen Einbauhöhen bei Verwendung unterschiedlicher Kombinationen von Motoren und Getriebe.

Es ist daher Aufgabe der Erfindung, eine Ausrückeinrichtung zur Kupplungsbetätigung bei Kraftfahrzeugen zu schaffen, mit welcher unterschiedliche Einbauhöhen zwischen einer Betätigungsebene der Kupplung und der Ausrückeinrichtung zu überwinden sind, ohne zusätzliche Teile zu verwenden, wobei der Unterschied der Einbauhöhen über Einstellmöglichkeiten der Ausrückmechanik hinausgeht, bzw. allzu großen Schrägstand der Ausrückschwinge vermeiden hilft.

Die Lösung der Aufgabe ist im kennzeichnenden Teil des Hauptanspruches beschrieben; ergänzende Merkmale sind den Unteransprüchen zu entnehmen.

Anhand von Zeichnungen ist ein Ausrücksystem für Zugbetätigung und ein anderes für Druckbetätigung dargestellt. Es zeigen:
- Fig. 1: einen Ausrücker für Zugbetätigung mit Nocken von unterschiedlicher Einbauhöhe auf einer Schiebehülse;
- Fig. 2: den Ausrücker gemäß Fig. 1 mit der Anordnung der Nocken am Umfang der Schiebehülse;
- Fig. 3: einen Ausrücker für Druckbetätigung mit Nocken unterschiedlicher Montagehöhe in perspektivischer Darstellung;
- Fig. 4: den Ausrücker gemäß Fig. 3 mit dem ersten Nocken und einer niedrigen Einbauhöhe;
- Fig. 5: den Nocken gemäß Fig. 3 mit dem zweiten Nocken und einer größeren Einbauhöhe;
- Fig. 6: den Ausrücker in Achsrichtung gesehen mit einer quadratisch verlaufenden Führungskontur auf der Schiebehülse;
- Fig. 7: die Kombination des Ausrückers mit einer Schwinge bei Anlage des ersten Nokkens an einer Betätigungsfläche zur Bildung der niedrigen Einbauhöhe;
- Fig. 8: die Kombination gemäß Fig. 7 mit Anlage des zweiten Nockens zur Bildung der größeren Einbauhöhe.

Wird mit 1 ein Ausrücker für Zugbetätigung der Kupplung bezeichnet, so besteht dieser aus einer Schiebehülse 2, einem Innenring 3 als Teil eines Ausrücklagers 4. Die Schiebehülse 2 weist auf ihrer zylindrischen Außenfläche ein erstes Nockenpaar 7 sowie eine zweites Nockenpaar 8 auf, wobei das erste Nockenpaar 7 Anlageflächen 9 und das zweite Nockenpaar 8 Anlageflächen 10 aufweisen, die mit einer von außen steuerbaren Betätigungseinrichtung zusammenwirken. Der Innenring 3 kommt mit den Federn der Kupplung in Berührung, wobei sich eine Betätigungsebene 28 definieren läßt, die sich aus der Form des Innenrings 3 ergibt. Von dieser Betätigungsebene 28 ist die erste Anlagefläche 9 um eine erste Einbauhöhe 5 beabstandet und die zweite Anlagefläche 10 weist eine Einbauhöhe 6 von der Betätigungsebene 28 auf, die größer ist als die erste Einbauhöhe 5.

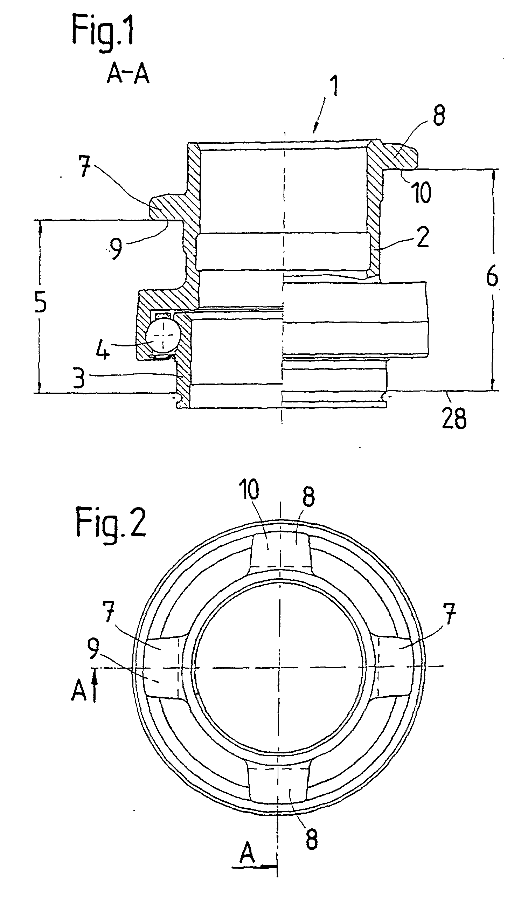

Gemäß Fig. 2 wird deutlich, daß zwei Nocken 7 sich auf der Schiebehülse 2 einander gegenüberliegen und ein Nockenpaar 7 bilden, welches die Einbauhöhe 5 aufweist, während das zweite Nockenpaar 8 um 90° versetzt an der äußeren Mantellinie der Schiebehülse 2 angeordnet ist. Eine solche Anordnung erlaubt es, den Ausrücker 1 entweder über die Anlageflächen 9 des Nockenpaares 7 oder aber über die Anlageflächen 10 des Nockenpaares 8 zu betätigen, wobei die Anlage zwischen einem Betätigungselement und dem jeweiligen Nockenpaar 7 oder 8 sich durch die Verdrehung der Einbauposition des Ausrückers 1 um 90° bewerkstelligen läßt. Da die Einbauposition des Ausrückers immer von dem Anschluß an das Betätigungselement abhängt ergibt sich somit eine Betätigungsebene 28, die einmal näher und einmal weiter von dem Betätigungselement entfernt ist. Es wird unterstellt, daß der Unterschied der beiden Einbauhöhen 5 und 6 größer ist, als die über das reine Maximieren des möglichen Weges der Ausrückermechanik hinausgehende Einstellweg.

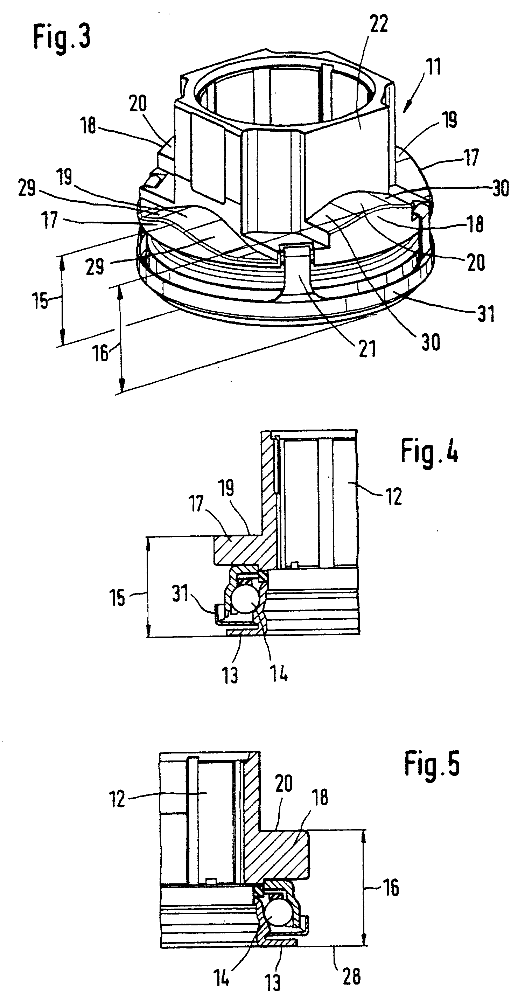

Gemäß den Fig. 3, 4 und 5 wird ein Ausrücker 11 gezeigt, der bei gedrückt betätigten Kupplungen für Fahrzeug ein Frage kommt. Dieser Ausrücker 11 weist eine Schiebehülse 12 auf, mit welcher über ein Ausrücklager 14 ein Innenring 13 verbunden ist, an dessen Ende sich gegenüber der Kupplung des Kraftfahrzeuges eine Betätigungsebene 28 ergibt. Die Schiebehülse 2 weist in Projektion der Mittelachse gesehen eine Führungskontur 22 auf, die einem Quadrat entspricht und als Begrenzungslinien für Nocken 17 und 18 dient, die sich nach radial außen anschließen. Der Bereich der flanschartigen Vergrößerung der Schiebehülse 2 entspricht dem Durchmesser des Ausrücklagers 14, wobei die Nocken 17 und 18 axial ausgerichtet sind, während der erste Nocken 17 eine erste Anlagefläche 19 und der zweite Nocken 18 eine zweite Anlagefläche 20 aufweist. Die Anlageflächen 19 und 20 sind nockenförmig gewölbt ausgeführt mit dem Ziel, eine Berührung eines Betätigungsorgans mit ihren Scheitellinien herbeizuführen.

Die Scheitellinien auf den Anlageflächen 19 der Nocken 17 sind, von der Betätigungsebene 28 in Achsrichtung des Ausrückers 11 gesehen, um eine erste Einbauhöhe 15 beabstandet, während die Scheitellinien der Anlagenflächen 20 der Nocken 18 um eine zweite Einbauhöhe 16 von der Betätigungsebene 28 entfernt liegen.

Das Ausrücklager 14 ist in axialer Richtung mit der Schiebehülse 2 durch einen Halter 31 verbunden, der Klammern 21 aufweist, die in Taschen einschnappen, die in der Schiebehülse 2 angeordnet sind. Durch besondere Gestaltung der Klammern 21 liegt das Ausrücklager 14 immer unter Vorspannung axial an der Schiebehülse 2 an.

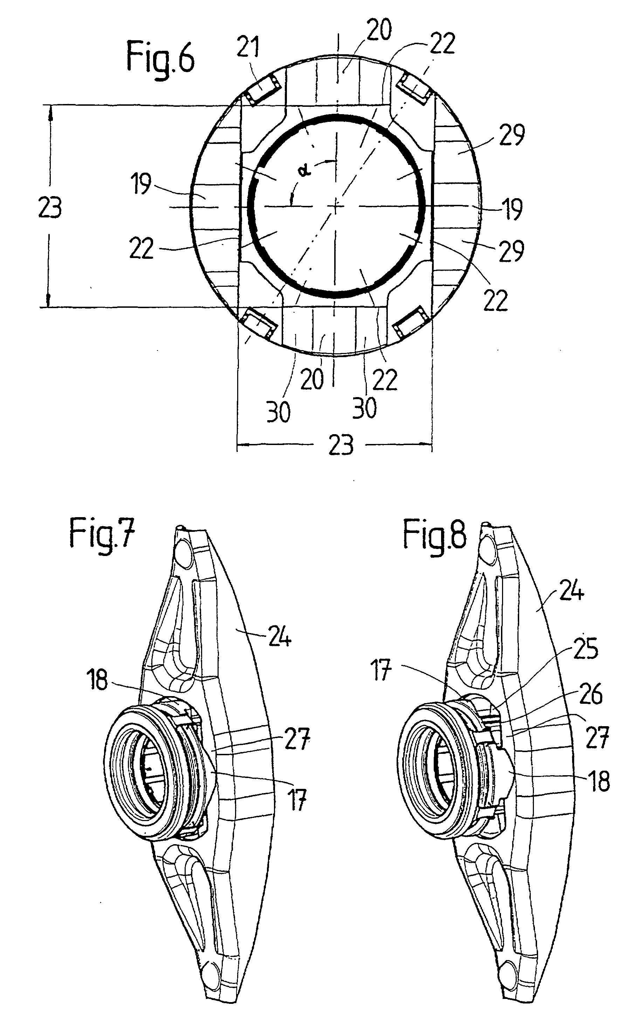

In Fig. 6 läßt sich die Führungskontur 22 in ihrer quadratischen Abmessung erkennen, wobei die Seitenlänge des Quadrates jeweils einem Außenmaß 23 entspricht. Außerhalb der Kontur 22 sind die Anlageflächen 19 und 20 der Nocken 17 und 18 angeordnet, wobei die Anlageflächen 19 auch über die Verlängerung der Führungskontur 22 hinausgeführt sind, wohingegen die Anlageflächen 20, die zu den zweiten Nocken 18 gehören, gegenüber den Nocken 18 eine größere Höhe aufweisen, wodurch sich seitlich im Schwenkbereich der Anlagefläche 20 ausreichend Raum für die Unterbringung der Klammern 21 ergibt.

Gemäß Fig. 7 wird die Verbindung der Schwinge 24 mit dem Ausrücker 11 dargestellt, wobei die Anlagefläche 19 des Nockens 17 mit einer Betätigungsfläche 27 der Schwinge 24 zusammenwirkt, während der höhere Nocken 18 in das Schwingenfenster 25 eintauchen kann. Hierdurch ist gewährleistet, daß die Schwinge 24 gegenüber dem Ausrücker 11 ausreichend Freiraum zu einer Schwenkbewegung bei der Betätigung der Kupplung erhält.

Gemäß Fig. 8 ist durch Verdrehung des Ausrückers 11 um 90° der höhere Nocken 18 mit seiner Anlagefläche 20 in Verbindung mit der Betätigungsfläche 27 der Schwinge 24 gebracht worden. In dieser Position wird die zweite Einbauhöhe 16 realisiert, die sich zwischen der Betätigungsfläche 27 an der Schwinge 24 und der Betätigungsebene 28 am Ausrücker 11 ergibt.

Die Beschreibung der Verbindung des Ausrückers 11 mit der Schwinge 24 ist auf eine Ausführung mit zwei Einbauhöhen 15 und 16 abgestellt. Durch geeignete Konstruktion sind jedoch Kombinationen von Ausrückern mit Schwingen denkbar, die mit drei Nokkenpaaren im Abstand jeweils von 60° am Umfang der Schiebehülse 2 für drei verschiedene Einbauhöhen einsetzbar ist. Um Einbaufehler zu vermeiden, ist es möglich, die Kombination des Ausrückers 11 mit der Schwinge 24 durch ein Kennzeichen auf Flanken 29 bzw. 30 der Nocken 17 bzw. 18 des Ausrückers 11 in der Weise zu kennzeichnen, daß je nach Einbauausrichtung die jeweils gültige Kennzeichnung durch das Schwingenfenster 25 sichtbar wird, während die für den anderen Einbaufall vorgesehene Kennzeichnung verdeckt ist.

Bei gezogen betätigten Kupplungen ist im Extremfall auf diese Weise sogar ein Ausrükker für Ein- und Zweischeibenkupplungen denkbar, wenn der axiale Bauraum hinter dem Ausrücker ausreicht.

## Patentansprüche

1. Ausrückeinrichtung zur Kupplungsbetätigung bei Kraftfahrzeugen, umfassend
∗ eine auf einer Führungshülse axial verschiebbare Schiebehülse (2,12);
∗ Nocken (7,17), die sich auf den Mantellinien der Schiebehülse (2,12) diametral gegenüber liegen und ein Nockenpaar (7,17) bilden und
∗ Anlageflächen (9,19) aufweisen, die mit einer Gabel oder einer Schwinge (24) zusammenwirken;
**dadurch gekennzeichnet,**
**daß** die Schiebehülse (2,12) mindestens zwei Nockenpaare (7,17;8,18...) aufweist, die am Umfang jeweils Winkelabstände (α) voneinander aufweisen, daß jedoch gegenüber einer Betätigungsebene (28) das erste Nockenpaar (7,17)) eine erste Einbauhöhe (5,15) und das zweite Nockenpaar (8,18) ein zweite Einbauhöhe (6,16) aufweist.

2. Ausrückeinrichtung nach Anspruch 1,
**dadurch gekennzeichnet,**
**daß** von den Anlageflächen (19 20) mit einer Betätigungsfläche (27) der Schwinge (24) entweder die ersten Anlageflächen (19) des ersten Nockenpaares (17) oder bei Drehung der Schiebehülse (12) um den Winkel (α) die zweiten Anlageflächen (20) des zweiten Nockenpaares (18) zusammenwirken können.

3. Ausrückeinrichtung nach Anspruch 1 oder 2,
**dadurch gekennzeichnet,**
**daß** der Winkel (α) bei der Realisierbarkeit von zwei Einbauhöhen z. B. 90° und von drei Einbauhöhen z. B. 60° beträgt.

4. Ausrückeinrichtung nach einem der Ansprüche 1 bis 3,
**dadurch gekennzeichnet,**
**daß** die Schiebehülse (12) eine Führungskontur (22) aufweist, die von einer Kontur (26) in der Schwinge (24) umgriffen wird.

5. Ausrückeinrichtung nach einem der Ansprüche 1 bis 4,
**dadurch gekennzeichnet,**
**daß** die Kontur (26) Teil eines Schwingenfensters (25) ist.

6. Ausrückeinrichtung nach einem der Ansprüche 1 bis 5,
**dadurch gekennzeichnet,**
**daß** die Kontur (26) als Zweiflachform im Schwingenfenster (25) eine Montage der Schiebehülse (12) in mindestens zwei Positionen erlaubt.

7. Ausrückeinrichtung nach einem der Ansprüche 1 bis 6,
**dadurch gekennzeichnet,**
**daß** zur Verbindung des Ausrücklagers (14) und der Schiebehülse (12) Klammern (21) angeordnet sind, die am Umfang der Schiebehülse (12) bevorzugt zwischen den Nocken (17,18) positioniert sind.

8. Ausrückeinrichtung nach Anspruch 1 bis 7,
**dadurch gekennzeichnet,**
**daß** auf den Nocken (17,18) Flanken (29,30) angeordnet sind, auf denen Kennzeichnungen für die zugehörigen Einbauhöhen (15,16) angebracht sind, wobei durch das Schwingenfenster (25) nur jeweils eine Kennzeichnung ablesbar ist, während die übrigen Kennzeichnungen durch die Kontur (26) verdeckt sind.

## Claims

1. Disengagement device for clutch actuation in motor vehicles, comprising
• a sliding sleeve (2, 12) axially displaceable on a guide sleeve;
• cams (7, 17) which are located diametrically opposite one another on the generatrices of the sliding sleeve (2, 12) and form a pair of cams (7, 17), and
• bearing surfaces (9, 19) which cooperate with a fork or a rocker (24);
**characterized in that** the sliding sleeve (2, 12) has at least two pairs of cams (7, 17; 8, 18 ...) which are in each case at angular distances (α) from one another on the circumference, but **in that**, with respect to an actuating plane (28), the first pair of cams (7, 17) has a first installed height (5, 15) and the second pair of cams (8, 18) has a second installed height (6, 16).

2. Disengagement device according to Claim 1, **characterized in that**, of the bearing surfaces (19, 20) either the first bearing surfaces (19) of the first pair of cams (17) or, in the event of the rotation of the sliding sleeve (12) through the angle (α), the second bearing surfaces (20) of the second pair of cams (18) can cooperate with an actuating surface (27) of the rocker (24).

3. Disengagement device according to Claim 1 or 2, **characterized in that** the angle (α) is, for example, 90° when two installed heights can be implemented and, for example, 60° when three installed heights can be implemented.

4. Disengagement device according to one of Claims 1 to 3, **characterized in that** the sliding sleeve (12) has a guide contour (22) which is surrounded by a contour (26) in the rocker (24).

5. Disengagement device according to one of Claims 1 to 4, **characterized in that** the contour (26) is part of a rocker window (25).

6. Disengagement device according to one of Claims 1 to 5, **characterized in that** the contour (26), as a dihedral shape in the rocker window (25), makes it possible for the sliding sleeve (12) to be mounted in at least two positions.

7. Disengagement device according to one of Claims 1 to 6, **characterized in that**, in order to connect the disengagement bearing (14) and the sliding sleeve (12), clamps (21) are arranged, which are positioned on the circumference of the sliding sleeve (12) preferably between the cams (17, 18).

8. Disengagement device according to Claims 1 to 7, **characterized in that** the cams (17, 18) have arranged on them flanks (29, 30) on which are affixed markings for the associated installed heights (15, 16), in each case only one marking being capable of being read off through the rocker window (25), while the other markings are concealed by the contour (26).

## Revendications

1. Dispositif de débrayage pour actionneur d'embrayage de véhicule, comprenant
* une douille coulissante (2, 12) déplaçable axialement sur une douille de guidage;
* des cames (7, 17), qui sont diamétralement opposées sur les génératrices de la douille coulissante (2, 12) et forment une paire de cames (7, 17) et
* présentent des faces de butée (9, 19), qui coopèrent avec une fourche ou une bielle oscillante (24);
**caractérisé en ce que** la douille coulissante (2, 12) présente au moins deux paires de cames (7, 17; 8, 18...), qui présentent en périphérie des distances angulaires (α) l'une de l'autre, **en ce que** la première paire de cames (7, 17) présente cependant une première hauteur de montage (5, 15) et la seconde paire de cames (8,18) une seconde hauteur de montage (6, 16) par rapport à un plan d'actionnement (28).

2. Dispositif de débrayage suivant la revendication 1, **caractérisé en ce que** parmi les faces de butée (19, 20), soit les premières faces de butée (19) de la première paire de cames (17) soit les secondes faces de butée (20) de la seconde paire de cames (18) en cas de rotation de la douille coulissante (12) de l'angle (α) peuvent coopérer avec une face d'actionnement (27) de la bielle oscillante (24).

3. Dispositif de débrayage suivant la revendication 1 ou 2, **caractérisé en ce que** l'angle (α) vaut par exemple 90° en cas de réalisation de deux hauteurs de montage et par exemple 60° en cas de réalisation de trois hauteurs de montage.

4. Dispositif de débrayage suivant l'une quelconque des revendications 1 à 3, **caractérisé en ce que** la douille coulissante (12) présente un contour de guidage (22), qui est entouré par un contour (26) dans la bielle oscillante (24).

5. Dispositif de débrayage suivant l'une quelconque des revendications 1 à 4, **caractérisé en ce que** le contour (26) fait partie d'une fenêtre de bielle oscillante (25).

6. Dispositif de débrayage suivant l'une quelconque des revendications 1 à 5, **caractérisé en ce que** le contour (26), sous forme d'un méplat double dans la fenêtre de bielle oscillante (25), permet un montage de la douille coulissante (12) dans au moins deux positions.

7. Dispositif de débrayage suivant l'une quelconque des revendications 1 à 6, **caractérisé en ce que**, pour l'assemblage du palier de débrayage (14) et de la douille coulissante (12), on a disposé des griffes (21), qui sont positionnées à la périphérie de la douille coulissante (12), de préférence entre les cames (17, 18).

8. Dispositif de débrayage suivant l'une quelconque des revendications 1 à 7, **caractérisé en ce que** des flancs (29, 30) sont disposés sur les cames (17, 18), sur lesquels sont apposées des mentions pour les hauteurs de montage correspondantes (15, 16), une seule mention pouvant être lue à travers la fenêtre de bielle oscillante (25) tandis que les autres mentions sont masquées par le contour (26).
